# EUROPÄISCHE PATENTSCHRIFT

(11) **EP 1 442 652 B1**
(45) Veröffentlichungstag und Bekanntmachung des Hinweises auf die Patenterteilung: **09.08.2006**
(21) Anmeldenummer: 04100207.2
(22) Anmeldetag: 22.01.2004
(51) Int. Cl.: A01F 29/20

(54) **Einrichtung zur Messung und/oder Überprüfung des Abstands zwischen einer Gegenschneide und einem Häckselmesser**
Device for measuring and/or controlling the clearance between a counter knife and a cutting chopper
Dispositif pour mesurer ou contrôler la distance entre un contre couteau et un couteau hacheur

(30) Priorität: 30.01.2003 DE 10303504
(43) Veröffentlichungstag der Anmeldung: 04.08.2004
(73) Patentinhaber: DEERE & COMPANY, Moline, Illinois 61265-8098 (US)
(72) Erfinder: Pirro, Peter, Dr., 66917, Wallhalben (DE); Clauss, Steffen, Dr., 66509 Rieschweiler-Mühlbach (DE)
(74) Vertreter: Holst, Sönke

(56) Entgegenhaltungen:
- EP-A- 0 706 752
- DE-A- 4 335 786
- GB-A- 2 312 958

## Beschreibung

Die Erfindung betrifft eine Einrichtung zur Messung und/oder Überprüfung des Abstands zwischen einer Gegenschneide und einem gegenüber der Gegenschneide bewegbaren Häckselmesser, mit einem Schwingungssensor, der eingerichtet ist, vom Häckselmesser in der Gegenschneide erzeugte mechanische Schwingungen zu erfassen, und einer mit dem Schwingungssensor verbundenen elektronischen Auswertungseinrichtung, die betreibbar ist, anhand des vom Schwingungssensor bereitgestellten Signals eine Information über den Abstand zwischen der Gegenschneide und dem Häckselmesser bereitzustellen.

Bei Feldhäckslern ist der Abstand zwischen den Häckselmessern und der Gegenschneide eine für die Schnittqualität und die zum Schneiden aufzubringende Leistung wichtige Größe. Derartige Gegenschneiden sind in der Regel durch Elektromotore gegenüber der Häckseltrommel verstellbar angeordnet. Es wurden eine Reihe von Einrichtungen vorgeschlagen (DE 41 34 957 A, DE 43 35 786 A, EP 0 706 752 A), bei denen an der Gegenschneide ein Klopfsensor angebracht ist, dessen Ausgangssignal eine Funktion des Abstands zwischen der Gegenschneide und den Häckselmessern ist. Bei diesen Einrichtungen wird das Ausgangssignal des Klopfsensors einem Tiefpass zugeführt und anhand der Amplitude entschieden, ob sich die Gegenschneide hinreichend nahe an den Häckselmessern befindet oder nicht. Als nachteilig ist anzusehen, dass die Wahl der Amplitude, bei welcher der Abstand als richtig anzusehen ist, sehr kritisch ist. Wird sie zu klein gewählt, ist der Abstand zu groß; wird sie zu groß gewählt, sind Kollisionen der Häckselmesser mit der Gegenschneide denkbar. Die Amplitude der Signale des Klopfsensors hängt aber auch von anderen Bedingungen ab, wie dem Zustand des Sensors etc..

Zur Messung des Abstands zwischen der Gegenschneide und den Häckselmessern sind weiterhin magnetische Sensoren bekannt, die einen mit der Gegenschneide verbundenen Permanentmagneten und eine Induktionsspule umfassen, in denen durch die vorbeistreichenden Häckselmesser eine EMK induziert wird, die verstärkt und detektiert wird. Bei einer derartigen Einrichtung, die in der EP 0 943 888 A beschrieben wird, werden die Induktionsspannungen einer Frequenzanalyse unterzogen. Die höherfrequenten Anteile des Signalspektrums werden zu den niederfrequenten Anteilen ins Verhältnis gesetzt. Der auf diese Weise bestimmte Quotient erhält eine Information über den Abstand zwischen Gegenschneide und Häckselmessern. Als nachteilig ist die Notwendigkeit der Verwendung eines Permanentmagneten anzusehen, der Funktionsstörungen eines in der Nähe der Gegenschneide angeordneten Metalldetektors bedingen kann.

In der DE 199 03 153 C wird vorgeschlagen, die durch die Häckselmesser auf die Gegenschneide ausgeübten Kräfte zu messen und anhand der Messwerte die Schärfe der Häckselmesser zu bestimmen.

In dem Aufsatz "Messverfahren zur Feststellung des Schärfezustandes der Paarung Häckselmesser/Gegenschneide eines Feldhäckslers" von A. Heinrich und G. Bernhardt, erschienen in Conference: Agricultural Engineering, Tagung Halle/Saale, 10. und 11. Oktober 2002 (VDI-MEG) auf den Seiten 325-330 wird ein anderes Verfahren zur Bestimmung der Schärfe von Häckselmessern vorgeschlagen. Es wird die Beschleunigung der Gegenschneide erfasst und einer Frequenzanalyse zugeführt. Anhand des Oberwellenspektrums ist feststellbar, ob die Häckselmesser noch hinreichend scharf sind oder nicht.

Die beiden zuletzt genannten Referenzen zeigen Möglichkeiten auf, die Schärfe von Häckselmessern zu bestimmen, jedoch geben sie keinen Hinweis auf die Messung des Abstands zwischen Gegenschneide und Häckselmessern.

Das der Erfindung zu Grunde liegende Problem wird darin gesehen, eine gegenüber dem beschriebenen Stand der Technik verbesserte Einrichtung zur Bestimmung des Abstands zwischen einer Gegenschneide und gegenüber der Gegenschneide bewegbaren Häckselmessern bereitzustellen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die vorliegende Erfindung macht sich die Tatsache zu Nutze, dass die von dem Häckselmesser oder den Häckselmessern angeregten mechanischen Schwingungen der Gegenschneide nicht nur unterschiedliche Amplituden, sondern auch unterschiedliche Frequenzspektren aufweisen, wenn sich der Abstand zwischen Gegenschneide und Häckselmessern ändert. Die mechanischen Schwingungen werden durch einen Schwingungssensor an der Gegenschneide oder angrenzenden Bauteilen erfasst und die vom Schwingungssensor bereitgestellten Signale werden einer Auswertungseinrichtung zugeführt. Dort wird eine Frequenzanalyse durchgeführt. Anhand des Ergebnisses der Frequenzanalyse wird eine Information über den Abstand zwischen der Gegenschneide und dem Häckselmesser erzeugt. Die erfindungsgemäße Einrichtung kann den Abstand messen, d.h. einen Abstandsmesswert erzeugen und/oder den Abstand überprüfen, d.h. mit einem Sollwert vergleichen.

Auf diese Weise erhält man eine Information über den Abstand zwischen der Gegenschneide und dem Häckselmesser, die von der Amplitude des Signals des Schwingungssensors unabhängig und deshalb weniger fehlerbehaftet ist. Zusätzlich kann die Auswertungseinrichtung aber auch die Amplituden der Signale des Schwingungssensors bei der Bestimmung der Abstandsinformation berücksichtigen.

Der Schwingungssensor ist vorzugsweise ein Schwingungssensor, der die Beschleunigung der Gegenschneide erfassen kann. Derartige Schwingungssensoren können die Bewegung einer federnd oder anderweitig elastisch aufgehängten Masse gegenüber der Gegenschneide erfassen. Zur Erfassung der mechanischen Schwingungen der Gegenschneide kann aber auch ein Mikrofon oder ein beliebiger anderer geeigneter Schwingungssensor verwendet werden.

Das Frequenzspektrum des vom Schwingungssensor bereitgestellten Signals enthält auch eine Information über die Schärfe der Häckselmesser. Diese Information kann von der Auswertungseinrichtung aus dem Signal des Schwingungssensors extrahiert werden. Ist anhand dieser Information erkennbar, dass die Schärfe der Messer einen Schwellenwert unterschreitet, kann dem Bediener ein entsprechender Hinweis gegeben werden, so dass er einen Schleifvorgang durchführen oder veranlassen kann und/oder es wird selbsttätig ein Schleifvorgang durchgeführt.

Die Auswertungseinrichtung liefert ein Signal, das eine Information über den Abstand zwischen der Gegenschneide und dem Häckselmesser enthält. Bei dieser Information kann es sich um einen konkreten Abstandswert handeln und/oder nur um eine Information, ob die Gegenschneide sich hinreichend nahe an und/oder weit von den Häckselmessern befindet. Diese Information kann dazu verwendet werden, einem Bediener auf optische, akustische oder andere Weise einen Hinweis zu geben, falls eine Neueinstellung der Position der Gegenschneide sinnvoll ist. Alternativ oder zusätzlich kann, wenn von der Auswertungseinrichtung eine Information bereitgestellt wird, die darauf hinweist, dass eine Verstellung der Gegenschneide sinnvoll ist, ggf. auch während des Häckselbetriebs eine selbsttätige Verstellung der Gegenschneide gegenüber dem Häckselmesser bzw. umgekehrt durchgeführt werden. Durch den stets optimalen Schneidspalt nutzen die Häckselmesser langsamer ab, so dass sie seltener geschliffen werden müssen und ihre Standzeit verlängert wird.

Bei der Entscheidung, ob eine Verstellung der Gegenschneide sinnvoll ist, kann auch die - vorzugsweise ebenfalls aus dem Frequenzspektrum des Signals des Schwingungssensors abgeleitete - Information über die Schärfe der Häckselmesser berücksichtigt werden, da auch die Schärfe das Frequenzspektrum der Schwingungen der Gegenschneide beeinflusst.

Auch Parameter des jeweils gehäckselten Ernteguts können die Schwingungen der Gegenschneide beeinflussen. So kann trockenes Erntegut wesentlich härter als weiches Erntegut sein, was unterschiedliche Schwingungsspektren der Gegenschneide bedingt. Außerdem kann der jeweils günstigste Abstand zwischen Gegenschneide und Häckselmesser von Erntegutparametern abhängen. Grobes Erntegut, wie z.B. dünne Baumstämme, kann einen größeren Abstand zwischen Gegenschneide und Häckselmesser erfordern als feineres Erntegut, wie z.B. Gras. In einer bevorzugten Ausführungsform der Erfindung wird daher die Auswertungseinrichtung mit einer Information über mindestens einen Parameter des Ernteguts beaufschlagt, die bei der Entscheidung, ob eine Verstellung der Gegenschneide sinnvoll ist, berücksichtigt wird. Die Information über den Erntegutparameter kann vom Bediener durch eine Eingabeeinrichtung manuell und/oder akustisch eingegeben werden. Denkbar ist auch, sie durch einen geeigneten Erntegutparametersensor zu erfassen und den Messwert des Erntegutparametersensors der Auswertungseinrichtung zuzuführen.

Die Auswertungseinrichtung unterzieht die Signale des Schwingungssensors vorzugsweise zunächst einer Fouriertransformation, um das Frequenzspektrum abzuleiten. Anschließend kann ein Vergleich mit Referenzdaten erfolgen, der eine Entscheidung ermöglicht, ob eine Verstellung der Gegenschneide sinnvoll ist.

In den Zeichnungen ist ein nachfolgend näher beschriebenes Ausführungsbeispiel der Erfindung dargestellt. Es zeigt:
- Fig. 1: eine Erntemaschine, an der die erfindungsgemäße Einrichtung verwendbar ist, in Seitenansicht und in schematischer Darstellung und
- Fig. 2: eine schematische Darstellung einer erfindungsgemäßen Einrichtung.

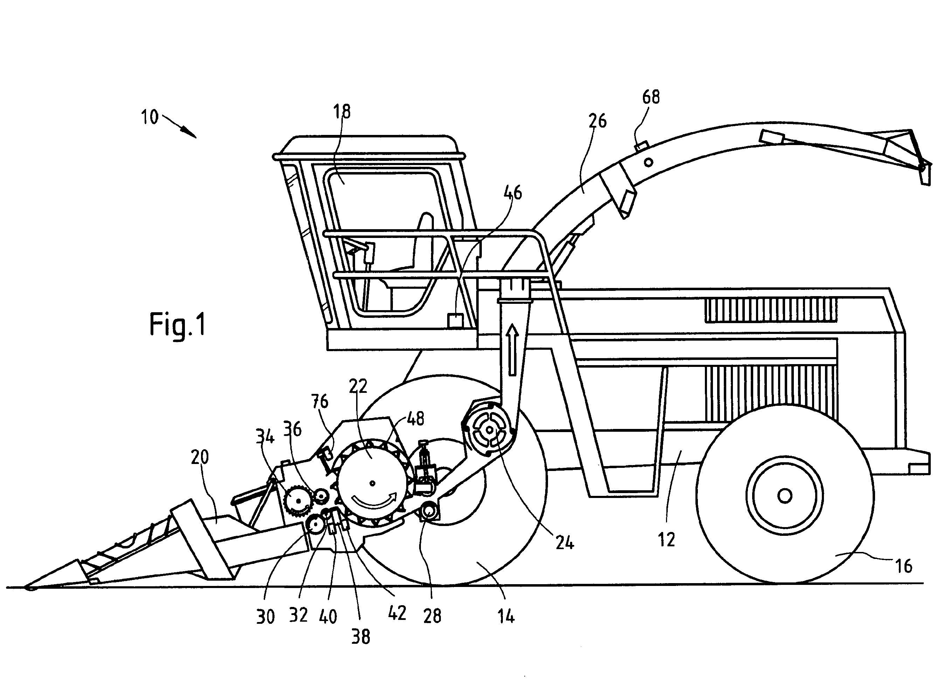

Eine in Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird einer mit Häckselmessern 48 besetzten Häckseltrommel 22 zugeführt, die es in kleine Stücke häckselt und es einer Fördervorrichtung 24 aufgibt. Das Gut verlässt die Erntemaschine 10 zu einem nebenher fahrenden Anhänger über einen drehbaren Austragsschacht 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird.

Zwischen der Erntegutaufnahmevorrichtung 20 und der Häckseltrommel 22 wird das Gut durch untere Vorpresswalzen 30, 32 und obere Vorpresswalzen 34, 36 transportiert. Die über den Umfang der Häckseltrommel 22 verteilten Messer wirken mit einer Gegenschneide 38 zusammen, um das Gut zu häckseln. Die Gegenschneide 38 ist mit einer Verstelleinrichtung 40 versehen, die zum Verfahren der Gegenschneide 38 in horizontaler Richtung auf die Häckseltrommel 22 zu und von ihr fort eingerichtet ist. Sie dient zum Einstellen des Schneidspalts. An der Gegenschneide 38 ist ein Schwingungssensor 42 angeordnet.

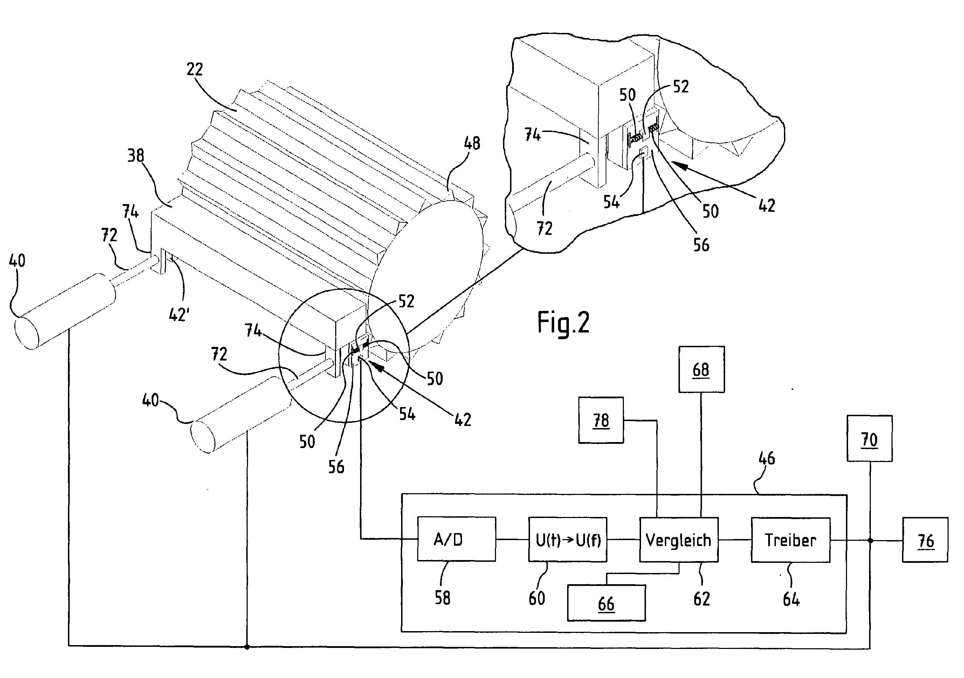

Die Einrichtung zur Messung des Abstands zwischen Gegenschneide 38 und den Häckselmessern 48 der Häckseltrommel 22 ist in der Figur 2 detaillierter dargestellt. Der an der Gegenschneide 38 befestigte Schwingungssensor 42 umfasst eine an Federn 50 aufgehängte Masse 52, deren Position durch einen Positionssensor 54 erfassbar ist, der beispielsweise kapazitiv oder induktiv arbeitet. Wird die Gegenschneide 38 beschleunigt, wird auch das daran vorzugsweise abnehmbar befestigte Gehäuse 56 des Schwingungssensors 42 beschleunigt, während die Masse 52 aufgrund ihrer Massenträgheit zunächst stationär bleibt und sich aufgrund der Aufhängung an den Federn 50 erst verzögert in Bewegung setzt. Die Relativbewegung zwischen Gehäuse 56 und Masse 52 wird durch den Positionssensor 54 nachgewiesen. In der Figur 2 erfasst der Schwingungssensor 42 in der Verstellrichtung der Gegenschneide 38 verlaufende Schwingungen. Es wäre auch denkbar, alternativ oder zusätzlich die Schwingungen in der dazu senkrechten, in Figur 2 in vertikaler Richtung verlaufenden Richtung nachzuweisen. Auch die Schwingungen in Längsrichtung der Gegenschneide 38 könnten nachgewiesen werden. Anstelle des dargestellten Schwingungssensors 42 könnte auch ein konventioneller Klopfsensor verwendet werden, da er ebenfalls zum Nachweis von Schwingungen geeignet ist.

Wie in der Zeichnung angedeutet, können Schwingungssensoren 42, 42' an beiden Enden der Gegenschneide 38 (oder an beliebigen Positionen dazwischen) angeordnet sein. Die Ausgangssignale der Positionssensoren 54 der Schwingungssensoren 42, 42' werden einer Auswertungseinrichtung 46 zugeführt, die beispielsweise in der Fahrerkabine 18 angeordnet ist. Die Auswertungseinrichtung umfasst einen Analog/Digitalwandler 58, der die ankommenden Signale digitalisiert. Sie werden anschließend digital verarbeitet, was durch einen Mikroprozessor erfolgen kann, der die nachfolgenden Funktionen Fouriertransformation 60, Vergleich mit einem Referenzspektrum 62 und einen Treiber 64 für die Motoren der Verstelleinrichtung 40 realisiert. Es ist aber auch denkbar, den genannten Funktionen jeweils spezielle Schaltkreise zuzuordnen.

Das digitalisierte Signal von den Schwingungssensoren 42 wird zunächst einer Fouriertransformation 60 unterzogen, so dass man ein Frequenzspektrum erhält. Letzteres kann regelmäßig aktualisiert werden. Das Frequenzspektrum der Schwingungssensoren enthält Informationen über den Abstand zwischen der Gegenschneide 38 und den Häckselmessern 48 und über ihre Schärfe, da beide Größen die in der Gegenschneide 38 angeregten mechanischen Schwingungen beeinflussen. In einem Speicher 66 ist ein Referenzspektrum abgelegt, dass einem bei scharfen Messern und optimalem Abstand zwischen Gegenschneide 38 und Häckselmessern 48 entsprechenden (vorzugsweise mit den vorhandenen Mitteln aufgenommenen) Frequenzspektrum entspricht. Es erfolgt im Verarbeitungsschritt bzw. in der Schaltung 62 ein Vergleich zwischen dem Referenzspektrum aus dem Speicher 66 und dem gemessenen Spektrum, dessen Ergebnis eine Information darüber enthält, ob sich die Gegenschneide 38 hinreichend nahe an den Häckselmessern 48 befindet oder näher heran zu bringen bzw. davon fort zu verstellen ist.

Bei dem Vergleich 62 wird zusätzlich eine Information eines Erntegutparametersensors 68 berücksichtigt. Der Erntegutparametersensor 68 ist in der dargestellten Ausführungsform am Auswurfschacht 26 angeordnet und kann z. B. die Feuchte des Ernteguts erfassen, wobei Mikrowellen Verwendung finden können. Andere Erntegutparameter, wie die Art des Ernteguts, können durch eine in der Fahrerkabine 18 angeordnete Eingabeeinrichtung 78 eingegeben werden und werden ebenfalls beim Vergleich 62 berücksichtigt. Dazu können im Speicher 66 den jeweiligen Erntegutparametern zugeordnete Spektren abgelegt sein, die zum Vergleich 62 entsprechend den aktuellen Erntegutparametern abgerufen werden.

Abhängig vom Ergebnis des Vergleichs 62 wird dem Bediener in der Fahrerkabine 18 über eine Anzeigeeinrichtung 70 eine Bestätigung gegeben, falls der Abstand zwischen der Gegenschneide 38 und den Häckselmessern 48 hinreichend exakt eingestellt wurde. Erweist sich hingegen eine Verstellung als sinnvoll, werden über die Treiber 64 die Verstelleinrichtungen 40 aktiviert, von denen jeweils ein an einem Ende der Gegenschneide 38 angeordnet ist. Die Verstelleinrichtungen 40 umfassen Motoren, die zum Drehen von Gewindewellen 72 betreibbar sind. Die Gewindewellen 72 durchdringen mit der Gegenschneide 38 verbundene Gewindeelemente 74, so dass die Verstelleinrichtungen 40 die Gegenschneide 38 in Richtung auf die Häckseltrommel 22 zu und von ihr fort verstellen können.

Anhand der Unterschiede in den Amplituden, Spektren und/oder zeitlichen Verläufe der Signale der Schwingungssensoren 42, 42' können die beiden Verstelleinrichtungen 40 unterschiedlich angesteuert werden, um beide Enden der Gegenschneide 38 in optimalen Abstand von den Häckselmessern 48 zu bringen.

Anhand des Vergleichs 62 kann außerdem festgestellt werden, ob die Häckselmesser 48 noch hinreichend scharf sind. Ist das nicht der Fall, kann durch die Auswertungseinrichtung 46 selbsttätig eine Schleifeinrichtung 76 in Betrieb gesetzt werden.

## Patentansprüche

1. Einrichtung zur Messung und/oder Überprüfung des Abstands zwischen einer Gegenschneide (38) und einem gegenüber der Gegenschneide (38) bewegbaren Häckselmesser (48), mit einem Schwingungssensor (42), der eingerichtet ist, vom Häckselmesser (48) in der Gegenschneide (38) erzeugte mechanische Schwingungen zu erfassen, und einer mit dem Schwingungssensor (42) verbundenen elektronischen Auswertungseinrichtung (46), die betreibbar ist, anhand des vom Schwingungssensor (42) bereitgestellten Signals eine Information über den Abstand zwischen der Gegenschneide (38) und dem Häckselmesser (48) bereitzustellen, **dadurch gekennzeichnet, dass** die Auswertungseinrichtung (46) betreibbar ist, eine Frequenzanalyse (60) des vom Schwingungssensor (42) bereitgestellten Signals durchzuführen und die Information über den Abstand zwischen der Gegenschneide (38) und dem Häckselmesser (48) aus dem Ergebnis der Frequenzanalyse (60) abzuleiten.

2. Einrichtung nach Anspruch 1, **dadurch gekennzeichnet, dass** der Schwingungssensor (42) zur Erfassung der Beschleunigung der Gegenschneide (38) eingerichtet ist.

3. Einrichtung nach Anspruch 1 oder 2, **dadurch gekennzeichnet, dass** die Auswertungseinrichtung (46) betreibbar ist, anhand der Frequenzanalyse (60) des vom Schwingungssensor (42) bereitgestellten Signals eine Information über die Schärfe des Häckselmessers (48) abzuleiten.

4. Einrichtung nach einem der Ansprüche 1 bis 3, **dadurch gekennzeichnet, dass** die Auswertungseinrichtung (46) betreibbar ist, anhand der gewonnenen Information über den Abstand zwischen der Gegenschneide (38) und dem Häckselmesser (48) eine Bedienerinformation abzugeben und/oder selbsttätig eine Verstellung der Gegenschneide (38) gegenüber dem Häckselmesser (48) zu veranlassen.

5. Einrichtung nach Anspruch 4, **dadurch gekennzeichnet, dass** die Auswertungseinrichtung (46) betreibbar ist, die gewonnene Information über die Schärfe des Häckselmessers (48) bei der Abgabe der Bedienerinformation und/oder der selbsttätigen Veranlassung einer Verstellung der Gegenschneide (38) zu berücksichtigen.

6. Einrichtung nach Anspruch 4 oder 5, **dadurch gekennzeichnet, dass** der Auswertungseinrichtung (46) eine manuell eingebbare und/oder durch wenigstens einen Erntegutparametersensor (68) erfassbare Information über einen Erntegutparameter zuführbar ist, und dass die Auswertungseinrichtung (46) betreibbar ist, die Information über den Erntegutparameter bei der Abgabe der Bedienerinformation und/oder der selbsttätigen Veranlassung einer Verstellung der Gegenschneide (38) zu berücksichtigen.

7. Einrichtung nach einem der Ansprüche 1 bis 6, **dadurch gekennzeichnet, dass** die Auswertungseinrichtung (46) betreibbar ist, die Signale des Schwingungssensors (42) einer Fouriertransformation zu unterziehen und die transformierten Signale mit Referenzdaten zu vergleichen.

8. Erntemaschine (10), insbesondere Feldhäcksler, mit einer Einrichtung nach einem der vorhergehenden Ansprüche.

## Claims

1. A device for measuring and/or checking the distance between an opposed blade (38) and a chopper blade (48) moveable relative to the opposed blade (38), with a vibration sensor (42) which is arranged to detect the mechanical vibrations created by the chopper blade (48) in the opposed blade (38), and an electronic evaluating device (46) which is connected to the vibration sensor (42) and is operable to provide information regarding the distance between the opposed blade (38) and the chopper blade (48) on the basis of the signals provided by the vibration sensor (42), **characterized in that** the evaluating device (46) is operable to perform a frequency analysis (60) of the signal provided from the vibration sensor (42) and to derive the information regarding the distance between the opposed blade (38) and the chopper blade (48) from the results of the frequency analysis (60).

2. A device according to claim 1, **characterized in that** the vibration sensor (42) is arranged to detect the acceleration of the opposed blade (38).

3. A device according to claim 1 or 2, **characterized in that** the evaluating device (46) is operable to derive information regarding the sharpness of the chopper blade (48) on the basis of the frequency analysis (60) of the signals provided by the vibration sensor (42).

4. A device according to any of claims 1 to 3, **characterized in that** the evaluating device (46) is operable on the basis of the derived information regarding the distance between the opposed blade (38) and the chopper blade (48) to provide operator information and/or to effect automatic adjustment of the opposed blade (38) relative to the chopper blade (48).

5. A device according to claim 4, **characterized in that** the evaluating device (46) is operable to take into account the derived information regarding the sharpness of the chopper blade (48) in the provision of the operator information and/or the automatic effecting of an adjustment of the opposed blade (38).

6. A device according to claim 4 or 5, **characterized in that** there can be supplied to the evaluating device (46) information regarding a crop parameter which can be input manually and/or be supplied by at least one crop parameter sensor (68), and **in that** the evaluating device (46) is operable to take into account the information regarding the crop parameter in the provision of the operator information and/or the automatic effecting of an adjustment of the opposed blade (38).

7. A device according to any of claims 1 to 6, **characterized in that** the evaluating device (46) is operable to subject the signals of the vibration sensor (42) to a Fourier transform and to compare the transformed signals with reference data.

8. A harvesting machine (10), especially a forage harvester, with a device according to any of the preceding claims.

## Revendications

1. Dispositif de mesure et/ou de contrôle de la distance entre une contre-lame (38) et une lame de hachage (48), mobile par rapport à la contre-lame (38), comportant un capteur de vibrations (42), qui est conçu pour enregistrer les vibrations mécaniques générées par la lame de hachage (48) dans la contre-lame (38), et un dispositif d'analyse (46) électronique, qui est relié au capteur de vibrations (42) et qui peut être actionné pour délivrer, à l'appui d'un signal émis par le capteur de vibrations (42), une information sur la distance entre la contre-lame (38) et la lame de hachage (48), **caractérisé en ce que** le dispositif d'analyse (46) peut être actionné pour effectuer une analyse de fréquence (60) du signal délivré par le capteur de vibrations (42) et pour dériver, à partir de l'analyse de fréquence (60), l'information sur la distance entre la contre-lame (38) et la lame de hachage (48).

2. Dispositif selon la revendication 1, **caractérisé en ce que** le capteur de vibrations (42) est conçu pour enregistrer l'accélération de la contre-lame (38).

3. Dispositif selon la revendication 1 ou 2, **caractérisé en ce que** le dispositif d'analyse (46) peut être actionné pour dériver, à l'appui de l'analyse de fréquence (60) du signal délivré par le capteur de vibrations (42), une information sur le tranchant de la lame de hachage (48).

4. Dispositif selon l'une quelconque des revendications 1 à 3, **caractérisé en ce que** le dispositif d'analyse (46) peut être actionné pour délivrer une information de service à l'appui de l'information obtenue sur la distance entre la contre-lame (38) et la lame de hachage (48), et/ou pour ordonner automatiquement un réglage de la contre-lame (38) par rapport à la lame de hachage (48).

5. Dispositif selon la revendication 4, **caractérisé en ce que** le dispositif d'analyse (46) peut être actionné pour tenir compte de l'information obtenue sur le tranchant de la lame de hachage (48) lors de l'émission de l'information de service et/ou de l'ordre automatique d'un réglage de la contre-lame (38).

6. Dispositif selon la revendication 4 ou 5, **caractérisé en ce qu'**une information sur un paramètre du produit à récolter, pouvant être entrée manuellement et/ou enregistrée par au moins un capteur de paramètres de récolte (68), peut être acheminée vers le dispositif d'analyse (46) et **en ce que** le dispositif d'analyse (46) peut être actionné pour tenir compte de l'information sur le paramètre du produit de récolte lors de l'émission de l'information de service et/ou de l'ordre automatique d'un réglage de la contre-lame (38).

7. Dispositif selon l'une quelconque des revendications 1 à 6, **caractérisé en ce que** le dispositif d'analyse (46) peut être actionné pour soumettre les signaux du capteur de vibrations (42) à une transformation de Fourier et de comparer les signaux transformés avec des données de référence.

8. Machine de récolte (10), en particulier ramasseuse-hacheuse, comportant un dispositif selon l'une quelconque des revendications précédentes.
